# EUROPÄISCHE PATENTSCHRIFT

(11) **EP 0 992 705 B1**
(45) Veröffentlichungstag und Bekanntmachung des Hinweises auf die Patenterteilung: **17.11.2004**
(21) Anmeldenummer: 99118626.3
(22) Anmeldetag: 21.09.1999
(51) Int. Cl.: F16F 9/348, F16F 9/512

(54) **Dämpfer**
Damper
Amortisseur

(30) Priorität: 08.10.1998 DE 19846373
(43) Veröffentlichungstag der Anmeldung: 12.04.2000
(73) Patentinhaber: SUSPA Holding GmbH, 90518 Altdorf (DE)
(72) Erfinder: Siegner, Helge, 90518 Altdorf (DE)
(74) Vertreter: Rau, Manfred, Dr. Dipl.-Ing.

(56) Entgegenhaltungen:
- FR-E- 83 156
- US-A- 3 070 191
- US-A- 4 721 130
- US-A- 5 042 624

## Beschreibung

Die Erfindung betrifft einen Dämpfer.

Dämpfer weisen üblicherweise ein zylindrisches Gehäuse auf, aus dem eine Kolbenstange abgedichtet herausgeführt ist. Am freien Ende der Kolbenstange und am durch einen Boden verschlossenen Ende des Gehäuses sind in der Regel Befestigungselemente angebracht. Die Kolbenstange ist an ihrem im Gehäuse befindlichen Ende mit einem Dämpfungskolben versehen, der das Gehäuse in zwei Gehäuse-Teilräume unterteilt. Das Gehäuse ist in der Regel mit einem Fluid, insbesondere einer Dämpfungsflüssigkeit, gefüllt. Je nach Dämpfungs-Anforderungen kann der Dämpfungskolben unterschiedlich ausgebildet sein; in der Regel sind Dämpfungsbohrungen im Kolben vorgesehen, durch die das Dämpfungsmedium bei einer Bewegung der Kolbenstange mit Dämpfungskolben relativ zum Gehäuse gedrückt wird. Bei derartigen Dämpfern, bei denen die Dämpfungsbohrungen also einen Drosselquerschnitt bilden, nimmt die Dämpfungskraft mit zunehmender Einschub- bzw. Ausschubgeschwindigkeit progressiv zu.

Weiterhin ist es bekannt, im Dämpfungskolben angeordnete Dämpfungsbohrungen einseitig mit einer Ventilplatte zu verschließen, die bei Überschreiten einer Einschub- bzw. Ausschubgeschwindigkeit und damit bei Überschreiten eines vorgegebenen, an ihr angreifenden Staudrucks öffnet. Durch derartige Ausgestaltungen werden degressiv verlaufende Dämpfungscharakteristiken erreicht.

Schließlich ist es bekannt, Ventilplatten vor Dämpfungsbohrungen in der Weise anzuordnen, daß sie bei Überschreiten einer vorgegebenen Einschub- bzw. Ausschubgeschwindigkeit die Dämpfungsbohrungen verschließen, wodurch eine stark progressive Dämpfungscharakteristik erreicht wird.

Ein gattungsgemäßer Dämpfer ist bekannt aus der US 3,070,191 A.

Aus der DE 38 13 402 C2 ist ein Dämpfer mit den allgemeinen beschriebenen Merkmalen bekannt, dessen Dämpfungskolben beidseitig mit Ventilplatten versehen ist, durch die je nach auftretendem Staudruck im Kolben befindliche Zylinderstifte verschoben werden, die eine Ventilplatte anheben.

Aus der DE 196 49 836 A1 ist eine Gasfeder mit einer Bremseinrichtung bekannt, die ein zylinderförmiges Gehäuse aufweist, in dem eine Kolbenstange axial beweglich angeordnet ist. In dem Zylinder ist eine Gasfüllung enthalten, die auf die Kolbenstange eine Ausschubkraft ausübt, die eine maximale Ausfahrgeschwindigkeit der Kolbenstange mit sich bringt, wobei bei einer Bewegungsgeschwindigkeit aufgrund äußerer Kräfte oberhalb der maximalen Ausfahrgeschwindigkeit die Bremseinrichtung wirksam wird, die die Bewegungsgeschwindigkeit auf ein gewünschtes Maß begrenzt. Diese Gasfeder ist beispielsweise als Hubhilfe an Motorhauben gedacht, die durch die geschilderte Bremseinrichtung verhindert, daß bei einem unbeabsichtigten Öffnen der Motorhaube während des Fahrens diese hochschlägt.

Der Erfindung liegt die Aufgabe zugrunde, einen Dämpfer zu schaffen, der einfach aufgebaut ist und beim Einschieben und Ausschieben der Kolbenstange in das Gehäuse jeweils bei Überschreiten einer vorgegebenen Geschwindigkeit von einer vorgegebenen Dämpfungskraft auf eine höhere Dämpfungskraft übergeht.

Diese Aufgabe wird erfindungsgemäß durch die Merkmale des Anspruches 1 gelöst. Der erfindungsgemäße Dämpfer stellt sicher, daß sowohl beim Überschreiten einer Einfahrgeschwindigkeit als auch beim Überschreiten einer vorgegebenen Ausfahrgeschwindigkeit der Kolbenstange die entsprechende Ventilscheibe den im Dämpfungskolben vorhandenen, radialen Kanal vollständig oder zumindest im wesentlichen verschließt.

Gemäß seinen vorteilhaften Weiterbildungen kann der erfindungsgemäße Dämpfer so ausgebildet werden, daß durch geringfügige konstruktive Änderungen, beispielsweise Änderungen der Dicke der Ventilscheiben und/oder Änderungen der Dicke der Distanzscheiben, der Ansprechpunkt verändert wird, bei dem von der einfachen Dämpfung auf eine erheblich höhere Dämpfung beim Einschieben und/oder Ausfahren der Kolbenstange übergegangen wird.

Weitere Merkmale, Vorteile und Einzelheiten der Erfindung ergeben sich aus der nachfolgenden Beschreibung eines Ausführungsbeispiels anhand der Zeichnung. Es zeigt:
- Fig. 1: einen Längsschnitt durch einen Dämpfer,
- Fig. 2: den Dämpfungskolben des Dämpfers in stark vergrößerter Darstellung in der Ruheposition des Dämpfers,
- Fig. 3: eine Ventilscheibe in Draufsicht,
- Fig. 4: den Dämpfungskolben bei einer geringen Einschubgeschwindigkeit,
- Fig. 5: den Dämpfungskolben bei hoher Einschubgeschwindigkeit,
- Fig. 6: den Dämpfungskolben bei geringer Ausfahrgeschwindigkeit und
- Fig. 7: den Dämpfungskolben bei hoher Ausfahrgeschwindigkeit.

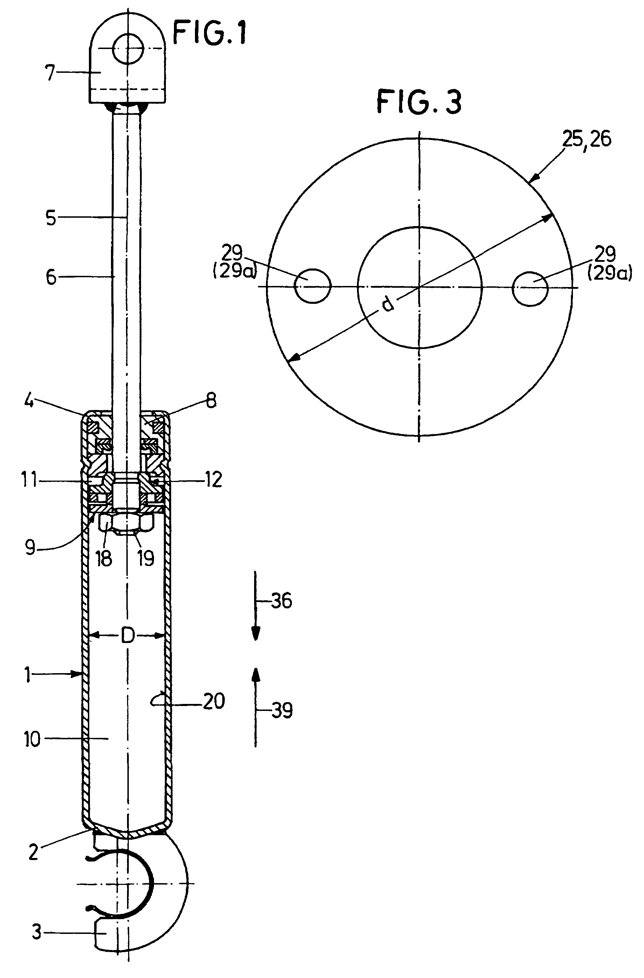

Der in Fig. 1 dargestellte hydraulische Dämpfer, bei dem es sich beispielsweise um einen Lenksäulen-Dämpfer handelt, weist ein im wesentlichen zylindrisches, also durch ein Rohr gebildetes Gehäuse 1 auf, das an einem Ende durch einen Boden 2 verschlossen ist. Am Boden 2 ist ein krallenartiges Befestigungselement 3 angebracht. Aus seinem dem Boden 2 entgegengesetzten Ende 4 ist eine koaxial zur Mittel-Längs-Achse 5 des Gehäuses 1 angeordnete Kolbenstange 6 aus dem Gehäuse 1 herausgeführt. Sie trägt an ihrem äußeren freien Ende ein weiteres Befestigungselement 7. Am Ende 4 ist die Kolbenstange 6 mittels einer Führungs- und DichtungsEinheit 8 in Richtung der Achse 5 verschiebbar, aber gas- und flüssigkeitsdicht geführt. Das Gehäuse 1 ist weitgehend mit einer Dämpfungsflüssigkeit als Dämpfungsfluid gefüllt.

An dem im Innenraum des Gehäuses 1 befindlichen Ende der Kolbenstange 6 ist ein Dämpfungskolben 9 angebracht, der weiter unten im einzelnen beschrieben wird. Dieser Dämpfungskolben 9 teilt den Innenraum des Gehäuses 1 in zwei Gehäuse-Teilräume 10, 11, von denen der Teilraum 10 zwischen dem Dämpfungskolben 9 und dem Boden 2 und der Teilraum 11 zwischen dem Dämpfungskolben 9 und der Führungs- und Dichtungseinheit 8 ausgebildet ist. Mit Ausnahme des noch zu beschreibenden Dämpfungskolbens 9 sind solche Dämpfer bekannt und marktüblich.

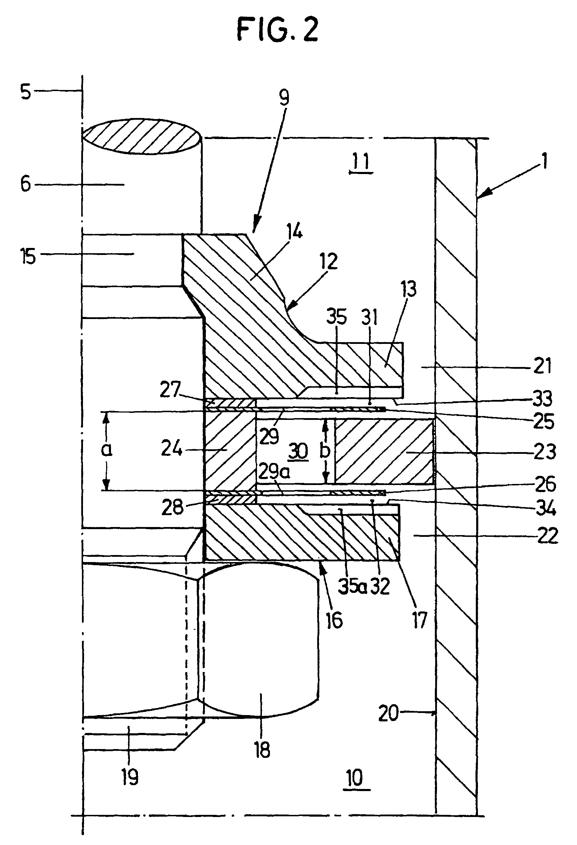

Wie Fig. 2 entnehmbar ist, ist der Dämpfungskolben mehrteilig ausgebildet. Er weist ein Druck-Kolbenteil 12 auf, dessen funktionswesentliches Teil eine Ringscheibe 13 ist, an der eine Befestigungsbüchse 14 ausgebildet ist, die in eine Ringnut 15 der Kolbenstange 6 eingerollt ist, so daß das Kolbenteil 12 in Richtung der Achse 5 fest auf der Kolbenstange 6 angebracht ist. Durch dieses Kolbenteil 12 wird der Dämpfungskolben 9 zum Teilraum 11 hin begrenzt.

Zum Teilraum 10 hin wird der Dämpfungskolben 9 durch ein Zug-Kolbenteil 16 begrenzt, das nach Art einer Zylinder-Ringscheibe 17 aufgebaut ist, die gleichermaßen wie die Ringscheibe 13 radial zur Achse 5 spielfrei auf der Kolbenstange 6 angeordnet ist. In Richtung der Achse 5 zum Teilraum 10 hin wird das Zug-Kolbenteil 16 durch eine Mutter 18 gehalten, die auf einen entsprechenden Gewindeansatz 19 der Kolbenstange 6 geschraubt ist. Zwischen dem Druck-Kolbenteil 12 und dem Zug-Kolbenteil 16 und der Innenwand 20 des Gehäuses 1 ist jeweils ein Ringspalt 21 bzw. 22 ausgebildet. Zwischen dem Kolbenteil 12 und dem Kolbenteil 16 ist ein weitgehend spielfreier, aber in Richtung der Achse 5 leicht verschiebbarer Ringkolben 23 angeordnet, der die Ringspalte 21, 22 überdeckt. Auf der Kolbenstange 6 ist mittig zwischen den Kolbenteilen 12 und 16 und auf gleicher Höhe mit dem Ringkolben 23 eine Distanzhülse 24 angeordnet. Beiderseits der Distanzhülse 24 liegen an dieser eine dem Druck-Kolbenteil 12 zugewandte Druck-Ventilscheibe 25 und eine dem Zug-Kolbenteil 16 zugewandte Zug-Ventilscheibe 26 an, zwischen denen und dem benachbarten Kolbenteil 12 bzw. 16 jeweils eine ringförmige Distanzscheibe 27 bzw. 28 angeordnet ist. Diese Distanzscheiben 27, 28 haben eine geringe Dicke in Richtung der Achse 5, von beispielsweise 0,25 mm. Mittels der Mutter 18 ist also das Paket aus Zug-Kolbenteil 16, Distanzscheibe 28, Zug-Ventilscheibe 26, Distanzhülse 24, Druck-Ventilscheibe 25, Distanzscheibe 27 und Druck-Kolbenteil 12 in Richtung der Achse 5 zusammengespannt.

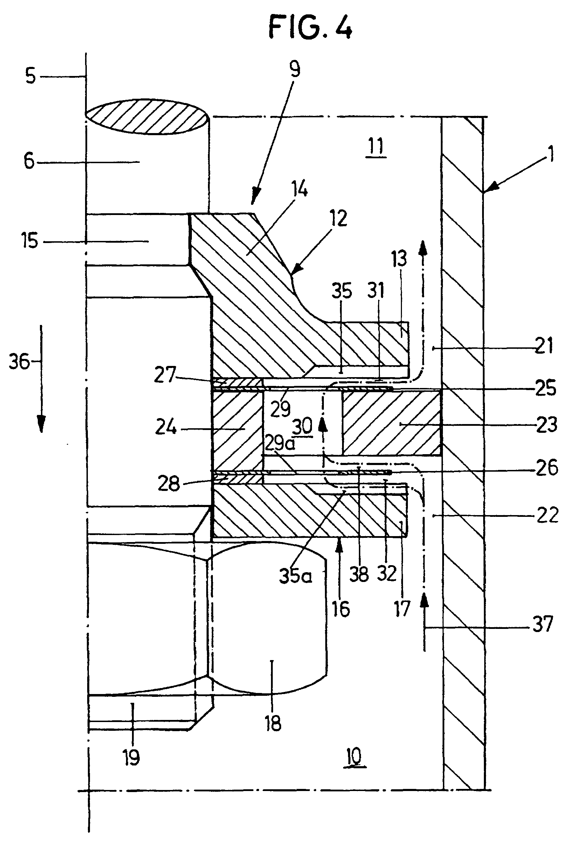

Wie unter anderem aus Fig. 3 hervorgeht, weisen die ringförmig ausgebildeten Ventilscheiben 25, 26 zwei Dämpfungsdurchlässe 29, 29a auf, die fluchtend mit dem zwischen der Distanzhülse 24 und dem Ringkolben 23 ausgebildeten Ringkanal 30 liegen. Die Dicke a der Distanzhülse 24 in Richtung der Achse 5 ist größer als die entsprechende Dicke b des Ringkolbens 23.

In dem in Fig. 2 dargestellten Ruhezustand des Dämpfungskolbens 9 ist zwischen der Druck-Ventilscheibe 25 und dem Druck-Kolbenteil 12 ein der Dicke der Distanzscheibe 27 entsprechender Radialkanal 31 ausgebildet, der den Ringkanal 30 mit dem Ringspalt 21 verbindet. Zwischen der Zug-Ventilscheibe 26 und dem Zug-Kolbenteil 16 ist im Ruhezustand ein Radialkanal 32 ausgebildet, der den Ringkanal 30 mit dem Ringspalt 22 verbindet. Die Ventilscheiben 25, 26 bestehen aus Federstahl und sind sehr dünn, beispielsweise 0,1 mm dick. Der Außendurchmesser d der Ventilscheiben 25, 26 ist kleiner als der Innendurchmesser D des Gehäuses 1. In den der jeweiligen Ventilscheibe 25 bzw. 26 zugewandten Stirnseiten 33, 34 der Kolbenteile 12 bzw. 16 können radial zur Achse 5 verlaufende Bypass-Kanäle 35, 35a ausgebildet sein, die dem jeweiligen Dämpfungsdurchlaß 29 zugeordnet sind, sich also mit diesem radial zur Achse 5 überdecken und in den jeweiligen Ringspalt 21, 22 münden.

Die Wirkungsweise des Dämpfers wird nachfolgend anhand der Fig. 4 bis 7 näher erläutert.

In Fig. 4 ist die Position der verschiedenen Teile des Dämpfungskolbens 6 dargestellt, wenn die Kolbenstange 6 in Einschubrichtung 36 in das Gehäuse 1 eingeschoben wird und zwar mit einer Geschwindigkeit unterhalb einer zur weitgehenden Blockierung des Dämpfers führenden Geschwindigkeit. Hierbei liegt der Ringkolben 23 gegen die Druck-Ventilscheibe 25 an, ohne diese nennenswert in Richtung der Achse 5 zu verbiegen. Da der Ringkolben 23 eine geringere axiale Erstreckung hat als die Distanzhülse 24, strömt Dämpfungsflüssigkeit entsprechend der Strömungslinie 37 aus dem Gehäuse-Teilraum 10 durch den Ringspalt 22, den Radialkanal 32, die Dämpfungsdurchlässe 29 in der Zug-Ventilscheibe 26, den Ringkanal 30, die Dämpfungsdurchlässe 29 in der Druck-Ventilscheibe 25, den Radialkanal 31 und den Ringspalt 21 in den Gehäuse-Teilraum 11. Außerdem fließt Dämpfungsflüssigkeit aus dem Ringspalt 22 außen um die Zug-Ventilscheibe 26 und durch einen Radialkanal 38 zwischen der Zug-Ventilscheibe 26 und dem Ringkolben 23 zum Ringkanal 30. Der Ringkolben 23 liegt hierbei dicht an dem außerhalb der Dämpfungsdurchlässe 29 befindlichen Bereich der Druck-Ventilscheibe 25 an.

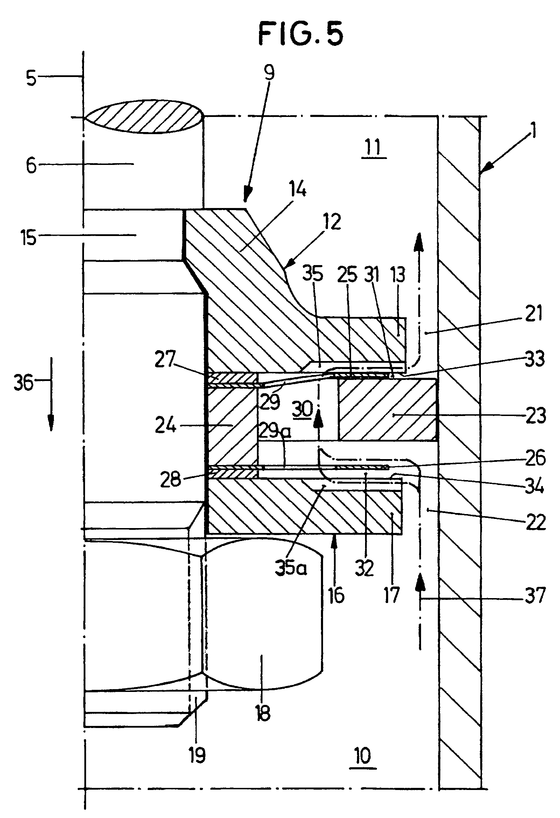

Wenn die Einschubgeschwindigkeit der Kolbenstange 6 in Einschubrichtung 36 über ein vorgegebenes Maß hinaus gesteigert wird, dann wird der Druck der Dämpfungsflüssigkeit auf den Ringkolben 23 einerseits und die Druck-Ventilscheibe 25 andererseits so groß, daß gemäß Fig. 5 die Druck-Ventilscheibe 25 zum Druck-Kolbenteil 12 ausgelenkt wird und sich dichtend gegen dessen Stirnseite 33 anlegt, wie in Fig. 5 dargestellt ist. Da damit der Radialkanal 31 bis auf die Bypass-Kanäle 35 geschlossen ist, nimmt die Dämpfungskraft sprungartig zu und kann bis in den Bereich einer Blockierung des Dämpfers gehen, wenn beispielsweise keine Bypass-Kanäle 35 vorhanden sind und wenn die Undichtigkeiten im Gesamtbereich des Dämpfungskolbens 9 gering sind.

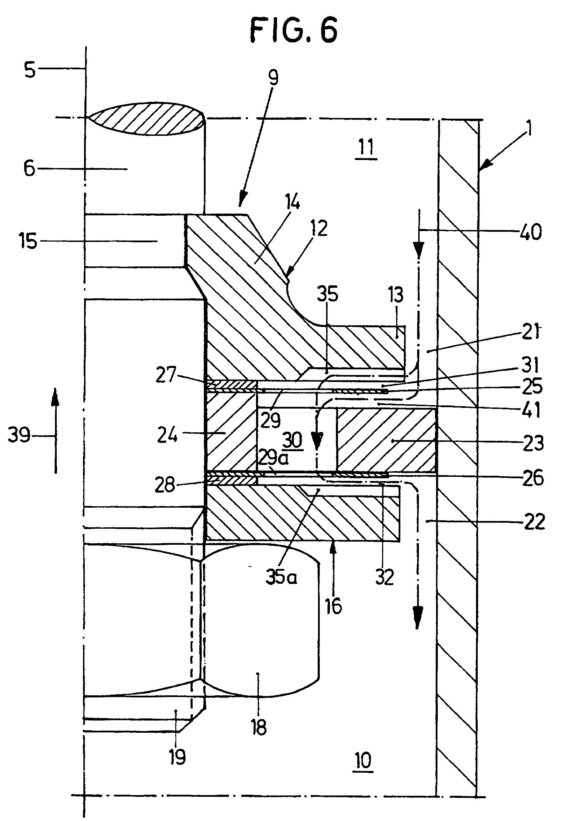

Wenn dagegen die Kolbenstange 6 mit geringer Geschwindigkeit entsprechend der Ausschubrichtung 39 aus dem Gehäuse 1 herausgezogen bzw. geschoben wird, legt sich der Ringkolben 23 entsprechend Fig. 6 gegen die Zug-Ventilscheibe 26, ohne diese in Richtung der Achse 5 zu verformen. Die Dämpfungsflüssigkeit fließt dann entsprechend der Strömungslinie 40 aus dem Gehäuse-Teilraum 11 durch den Ringspalt 21, den Radialkanal 31, die Dämpfungsdurchlässe 29 in der Druck-Ventilscheibe 25, den Ringkanal 30, die Dämpfungsdurchlässe 29a in der Zug-Ventilscheibe 26, den Radialkanal 32 und den Ringspalt 22 in den Gehäuse-Teilraum 10. Außerdem fließt Dämpfungsflüssigkeit aus dem Ringspalt 21 außen um die Druck-Ventilscheibe 25 und durch den zwischen dieser und dem Ringkolben 23 gebildeten Radialkanal 41 zum Ringkanal 30.

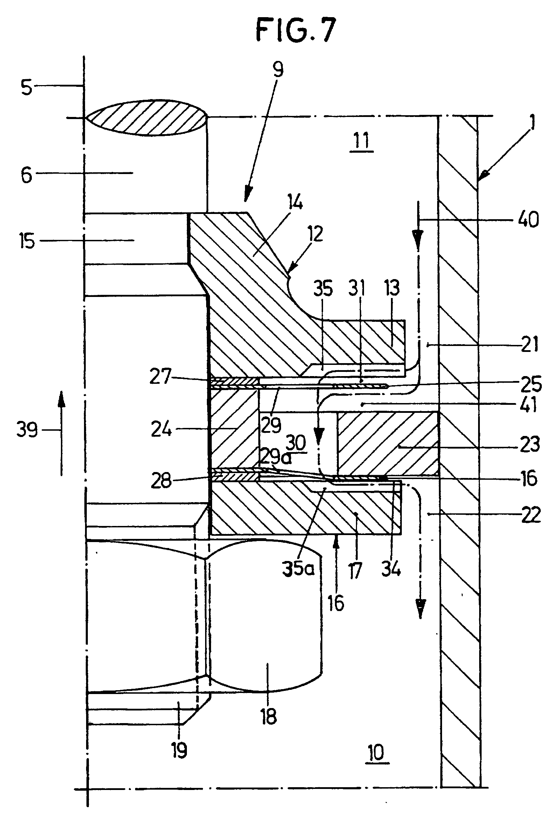

Wenn die Ausschubgeschwindigkeit ein vorgegebenes Maß überschreitet, dann wird der auf den Ringkolben 23 und die Zug-Ventilscheibe 26 wirkende Staudruck so groß, daß die Zug-Ventilscheibe 26 entsprechend der Darstellung in Fig. 7 zur Anlage an die Stirnseite 34 des Zug-Kolbenteils 16 kommt, so daß die Dämpfungsflüssigkeit nur noch durch die Bypass-Kanäle 35a in der Stirnseite 34 des Zug-Kolbenteils 16 in Richtung zum Gehäuse-Teilraum 10 strömen kann. Die Dämpfung steigt also sprunghaft an. Die Dämpfungs- bzw. Blockier-Verhältnisse sind beim Einschieben bzw. Ausschieben der Kolbenstange 6 in das bzw. aus dem Gehäuse 1 grundsätzlich die gleichen, wobei die jeweils auftretenden Kräfte zahlenmäßig unterschiedlich sein können.

Wie sich aus dem Vorstehenden ergibt, wurden der Begriff "Druck-Kolbenteil 12" und "Druck-Ventilscheibe 25" gewählt, weil sie bei Druck auf den Dämpfer, also beim Einschieben der Kolbenstange 6 in das Gehäuse 1, in Funktion treten, während das "Zug-Kolbenteil 16" und die "Zug-Ventilscheibe 26" bei Zug auf den Dämpfer, also beim Ausfahren der Kolbenstange 6 aus dem Gehäuse 1, in Funktion treten.

Wie sich aus dem Vorstehenden weiterhin ergibt, kann die Einschub- bzw. Ausschub-Geschwindigkeit der Kolbenstange 6, bei der der Sprung von einfacher Dämpfung auf eine angenäherte Blockierung eintritt, durch Veränderung der Dicke der Ventilscheiben 25 bzw. 26 verändert werden. Je dicker die Ventilscheiben 25, 26 sind, um so steifer sind sie, d.h. die Geschwindigkeit, bei der ein Übergang von der einfachen Dämpfung auf eine Quasi-Blockierung eintritt, nimmt zu. Je dünner die Ventilscheibe 25 bzw. 26 ist, um so geringer wird diese Geschwindigkeit.

In gleicher Weise kann durch Veränderung der Dicke der Distanzscheiben 27, 28 in Richtung der Achse 5 der Weg in Richtung der Achse 5 verändert werden, den die jeweilige Ventilscheibe 25 bzw. 26 aus ihrer Ruhelage zurücklegen muß, bevor der jeweilige Radialkanal 31 bzw. 32 verschlossen wird. Da die zum Verformen der Ventilscheibe 25, 26 in Richtung der Achse 6 erforderliche, durch den geschilderten Staudruck gebildete Kraft mit dem Verformungsweg zunimmt, wird also der entsprechende Radialkanal 31 bzw. 32 bei geringerer Dicke der Distanzscheibe 27 bzw. 28 kleiner und umgekehrt.

## Patentansprüche

1. Dämpfer
- mit einem zylindrischen Gehäuse (1), das
-- eine Innenwand (20),
-- eine Mittel-Längs-Achse (5),
-- einen Boden (2) und
-- ein dem Boden (2) entgegengesetztes Ende (4)
aufweist;
- mit einer konzentrisch zur Mittel-Längs-Achse (5) angeordneten Kölbenstange (6),
-- die aus dem Ende (4) durch eine Führungs- und Dichtungseinheit (8) aus dem Gehäuse (1) herausgeführt ist,
und
- mit einem Dämpfungskolben (9),
-- der an dem im Gehäuse (1) befindlichen Ende der Kolbenstange (6) angeordnet ist,
-- der den Innenraum des Gehäuses (1) in zwei Gehäuse-Teilräume (10, 11) unterteilt,
-- der je ein den Dämpfungskolben (9) begrenzendes Druck-Kolbenteil (12) und Zug-Kolbenteil (16) aufweist,
**dadurch gekennzeichnet, dass** der Dämpfungskolben (9)
- im Abstand zu einer Stirnseite (33) des Druck-Kolbenteils (12) eine Druck-Ventilscheibe (25) und im Abstand zu einer Stirnseite (34) des Zug-Kolbenteils (16) eine Zug-Ventilscheibe (26) aufweist,
- zwischen den Ventilscheiben (25, 26) benachbart zur Kolbenstange (6) eine Distanzhülse (24) aufweist,
- einen an der Innenwand (20) anliegenden, die Distanzhülse (24) unter Freilassung eines Ringkanals (30) umgebenden und gegenüber den Kolbenteilen (12, 16) in Richtung der Mittel-Längs-Achse (5) leicht verschiebbaren Ringkolben (23) aufweist und
- in jeder Ventilscheibe (25, 26) mindestens einen den Ringkanal (30) mit einem Radialkanal (31, 32) zwischen der Ventilscheibe (25, 26) und dem benachbarten Kolbenteil (12, 16) verbindenden Dämpfungsdurchlass (29, 29a) aufweist, wobei die Ventilscheiben (25, 26) so ausgeführt sind, dass beim Überschreiten einer Einfahrgeschwindigkeit eine der beiden Ventilscheiben (25, 26) und beim Überschreiten einer vorgegebenen Ausfahrgeschwindigkeit der Kolbenstange (6) die andere der beiden Ventilscheiben (25, 26) den Radialkanal (31, 32) vollständig oder zumindest im Wesentlichen verschließt.

2. Dämpfer nach Anspruch 1, **dadurch gekennzeichnet,**
**daß** zwischen den Ventilscheiben (25, 26) und den benachbarten Kolbenteilen (12, 16) jeweils eine Distanzscheibe (27, 28) angeordnet ist.

3. Dämpfer nach Anspruch 1 oder 2, **dadurch gekennzeichnet,**
**daß** zwischen dem Druck-Kolbenteil (12) und der Innenwand (20) des Gehäuses (1) ein Ringspalt (21) ausgebildet ist.

4. Dämpfer nach Anspruch 3, **dadurch gekennzeichnet,**
**daß** in der der Druck-Ventilscheibe (25) zugewandten Stirnseite (33) des Druck-Kolbenteils (12) mindestens ein den mindestens einen Dämpfungsdurchlaß (29) mit dem das Druck-Kolbenteil (12) umgebenden Ringspalt (21, 22) verbindender Bypass-Kanal (35) ausgebildet ist.

5. Dämpfer nach einem der Ansprüche 1 bis 4, **dadurch gekennzeichnet**, zwischen dem Zug-Kolbenteil (16) und der Innenwand (20) des Gehäuses (1) ein Ringspalt (22) ausgebildet ist.

6. Dämpfer nach Anspruch 5, **dadurch gekennzeichnet,**
**daß** in der der Zug-Ventilscheibe (26) zugewandten Stirnseite (34) des Zug-Kolbenteils (16) mindestens ein den mindestens einen Dämpfungsdurchlaß (29a) der Zug-Ventilscheibe (26) mit dem das Zug-Kolbenteil (16) umgebenden Ringspalt (22) verbindender Bypass-Kanal (35a) ausgebildet ist.

## Claims

1. Damper
- having a cylindrical housing (1), which comprises
-- an inner wall (20),
-- a central longitudinal axis (5),
-- a base (2) and
-- an end (4) lying opposite the base (2);
- having a piston rod (6), which is disposed concentrically with the central longitudinal axis (5) and
- is guided from the end (4) by a guiding and sealing unit (8) out of the housing (1),
and
- having a damping piston (9), which
-- is disposed on the end of the piston rod (6) situated in the housing (1),
-- subdivides the interior of the housing (1) into two housing sub-chambers (10, 11),
-- comprises one thrust piston part (12) and one tension piston part (16), which delimit the damping piston (9),
**characterised in that** the damping piston (9)
- at a distance from an end face (33) of the thrust piston part (12) has a thrust valve plate (25) and at a distance from an end face (34) of the tension piston part (16) has a tension valve disc (26),
- between the valve plates (25, 26) adjacent to the piston rod (6) has a spacer sleeve (24),
- has an annular piston (23), which lies adjacent to the inner wall (20) and surrounds the spacer sleeve (24) while leaving free an annular channel (30) and is slightly displaceable relative to the piston parts (12, 16) in the direction of the central longitudinal axis (5), and
- in each valve plate (25, 26) has at least one damping passage (29, 29a), which connects the annular channel (30) to a radial channel (31, 32) between the valve plate (25, 26) and the adjacent piston part (12, 16), wherein the valve plates (25, 26) are so designed that, when a retraction speed is exceeded, one of the two valve plates (25, 26) and, when a preset extension speed of the piston rod (6) is exceeded, the other of the two valve plates (25, 26) fully or at least substantially closes the radial channel (31, 32).

2. Damper according to claim 1, **characterised in**
**that** disposed between the valve plates (25, 26) and the adjacent piston parts (12, 16) there is in each case a spacer disc (27, 28).

3. Damper according to claim 1 or 2, **characterised in**
**that** between the thrust piston part (12) and the inner wall (20) of the housing (1) an annular gap (21) is formed.

4. Damper according to claim 3, **characterised in**
**that** in the end face (33) of the thrust piston part (12) facing the thrust valve plate (25) at least one bypass channel (35) is formed, which connects the at least one damping passage (29) to the annular gap (21, 22) surrounding the thrust piston part (12).

5. Damper according to one of claims 1 to 4, **characterised in**
**that** between the tension piston part (16) and the inner wall (20) of the housing (1) an annular gap (22) is formed.

6. Damper according to claim 5, **characterised in**
**that** in the end face (34) of the tension piston part (16) facing the tension valve plate (26) at least one bypass channel (35a) is formed, which connects the at least one damping passage (29a) of the tension valve plate (26) to the annular gap (22) surrounding the tension piston part (16).

## Revendications

1. Amortisseur comportant
- un boîtier cylindrique (1) qui comprend
- - une paroi intérieure (20),
- - un axe longitudinal médian (5),
- - un fond (2), et
- - une extrémité (4) opposée au fond (2),
- une tige de piston (6) agencée concentriquement à l'axe longitudinal médian (5), qui
- - est menée vers l'extérieur hors du boîtier par l'extrémité (4) à travers une unité de guidage et d'étanchéité (8),
et
- un piston d'amortissement (9) qui
- - est agencé sur l'extrémité de la tige de piston (6), qui est située dans le boîtier (1),
- - subdivise l'espace intérieur du boîtier (1) en deux espaces partiels (10, 11),
- - comprend une partie de piston de pression (12) et une partie de piston de traction (16) limitant chacune le piston d'amortissement (9),
**caractérisé en ce que** le piston d'amortissement (9) comprend
- à distance d'une face frontale (33) de la partie de piston de pression (12), un disque de valve de pression (25), et à distance d'une face frontale (34) de la partie de piston de traction (16), un disque de valve de traction (26),
- au voisinage de la tige de piston (6) une douille d'écartement (24) entre les disques de valve (25, 26),
- un piston annulaire (23) qui prend appui contre la paroi intérieure (20), entoure la douille d'écartement (24) en laissant libre un canal annulaire (30) et qui est aisément déplaçable par rapport aux parties de piston (12, 16) en direction de l'axe longitudinal médian (5), et
- dans chaque disque de valve (25, 26) au moins un passage d'amortissement (29, 29a) reliant le canal annulaire (30) à un canal radial (31, 32) entre le disque de valve (25, 26) et la partie de piston voisine (12, 16), les disques de valve (25, 26) étant réalisés de telle sorte que lors du dépassement d'une vitesse d'introduction, c'est l'un des deux disques de valve (25, 26), et lors du dépassement d'une vitesse de sortie prédéterminée de la tige de piston (6), c'est l'autre des deux disques de valves (25, 26) qui referme le canal radial complètement ou au moins sensiblement.

2. Amortisseur selon la revendication 1, **caractérisé en ce qu'**un disque d'écartement respectif (27, 28) est agencé entre les disques de valve (25, 26) et les parties de piston voisines (12, 16).

3. Amortisseur selon l'une ou l'autre des revendications 1 et 2, **caractérisé en ce qu'**une fente annulaire (21) est ménagée entre la partie de piston de pression (12) et la paroi intérieure (20) du boîtier (1).

4. Amortisseur selon la revendication 3, **caractérisé en ce qu'**il est prévu dans la face frontale (33) de la partie de piston de pression (12), tournée vers le disque de valve de pression (25), au moins un canal de by-pass (35) reliant au moins un passage d'amortissement (29) à la fente annulaire (21, 22) entourant la partie de piston de pression (12).

5. Amortisseur selon l'une des revendications 1 à 4, **caractérisé en ce qu'**une fente annulaire (22) est ménagée entre la partie de piston de traction (16) et la paroi intérieure (20) du boîtier (1).

6. Amortisseur selon la revendication 5, **caractérisé en ce que** dans la face frontale (34) de la partie de piston de traction (16), tournée vers le disque de valve de traction (26), il est réalisé au moins un canal de by-pass (35a) reliant au moins un passage d'amortissement (29a) du disque de valve de traction (26) à la fente annulaire (22) entourant la partie de piston de traction (16).
